# EUROPEAN PATENT SPECIFICATION

(11) **EP 1 970 794 B1**
(45) Date of publication and mention of the grant of the patent: **26.07.2017**
(21) Application number: 08152737.6
(22) Date of filing: 14.03.2008
(51) Int. Cl.: G06F 1/16

(54) **Wearable device**
Tragbare Vorrichtung
Dispositif portable

(30) Priority: 15.03.2007 IT UD20070055
(43) Date of publication of application: 17.09.2008
(73) Proprietor: Eurotech SPA, 33020 Amaro (IT)
(72) Inventor: Tecchiolli, Giampietro, 38100, Trento (IT); Pezzulli, Giorgio, 33100, Udine (IT); Adami, Stefano, 38060, Volano (TN) (IT)
(74) Representative: Petraz, Gilberto Luigi

(56) References cited:
- US-A- 4 751 664
- US-A- 5 657 201
- US-A1- 2006 076 381

## Description

### FIELD OF THE INVENTION

The present invention concerns a wearable device, particularly but not restrictively, an electronic calculation device or personal computer. The device according to the present invention is mechanically and selectively configurable by the user so as to be worn without distinction on parts of the user's body in symmetrical positions with respect to the body, in particular on the right or left wrist, maintaining the same wearability, functionality and operating conditions, with an easy and quick reconfiguration mode. The preamble of the main claim is based on US-A-5,657,201.

### BACKGROUND OF THE INVENTION

Wearable electronic devices, or "wearables" in English, are known, with the function of Personal Assistant (PA) or Personal Enhancement (PE). Some examples are smart viewers for night vision, scanning and/or acquisition devices for bar codes worn on the hand, calculation units for specific applications integrated on the uniform of an operator or others with graphic interface or display (*GUI, Graphic User Interface*) integrated, which assist the user in performing a number of operations, or which provide the user with an increase in his perceptive or active capacities.

In particular, electronic devices are known, wearable on the arm or wrist of the operator.

Among the main properties required of a wearable device, there is optimum ergonomics and maximum integration in the user's clothing, at the same time guaranteeing efficient access, in particular to the user interface (*MMI, Man Machine Interface*), which can be for example a keyboard with function keys, a joypad, a display interface, possibly with a touch screen, a limited alphanumerical keyboard, loud speakers or other.

In particular, in devices worn on the wrist, the MMI comprises, normally on the same plane, which is the plane of the open hand, and in a close-up position, both a display unit, for example an integrated display, and a data introduction unit, for example consisting of a keyboard, a touch screen or other equipment.

Moreover, in electronic apparatuses worn on the wrist, it is also necessary to take into account ergonomics, wearability, comfort and usability, since prolonged use could cause tiredness to the limb and malaise for the operator.

The display unit and the data introduction unit are normally mounted on a rigid structure of an ergonomic and/or encircling type, provided with a bracelet for attachment to the wrist.

As far as the display unit is concerned, according to the information to be shown and/or the type of interaction required from the operator, it can vary considerably in size, shape, technology and appearance of the information displayed, or other parameters.

Furthermore, these devices are also often provided with functional mechanical units, such as for example a bar code reader, connectors for communication interfaces, slots for memory cards or other, which limits their position for practical use.

In the light of this, known devices are specifically made to optimize wearability on the wrist and functionality when worn.

This constitutes a limit which must be respected in making known devices, and imposes mechanical and ergonomical choices which limit use to a single wrist or arm. A further limit to the use of such known devices is that they cannot be moved as desired from one arm or wrist to the other, according to the requirements of the operating conditions and/or the clothing worn by the operator. This requires that such known devices be made as two different models, one for the right wrist and one for the left wrist.

To obviate this disadvantage, devices wearable on the wrist are known which, when rotated by 180° with respect to an axis perpendicular to the plane defined by the wrist, maintain an equivalent, if not equally optimum, usability and wearability, even if the user interface can change position, and can therefore be worn on the right wrist or the left. However, as we said, usability and wearability are not equally optimized in the two uses, on the left or right wrist. For example, it may be that the user interface is less accessible and that some apertures, such as slots for PCMCIA cards, and/or the on-off switch, are in a position that is difficult to access and/or use.

One purpose of the present invention is to achieve a device wearable without distinction on different parts of a user's body, for example, but not only, on both wrists, right and left, maintaining the same wearability and the same type of access and management of the user interface.

Another purpose of the present invention is to achieve a wearable device that is configurable mechanically in a quick and easy way, to change the position from one part of the user's body to another, for example the right wrist and left wrist and vice versa, also when the device is in use.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a wearable device according to the present invention comprises a rigid structure with an at least partial function as a bracelet, able to be associated with a first part of a user's body, and at least a user interface, to insert or receive information and/or to display data, mounted on the rigid structure and having a base resting on the corresponding part of the user's body.

According to a characteristic feature of the present invention, said rigid structure comprises at least a first stop element and a second stop element able to be positioned releasably with respect to the base so as to assume a first condition configured for ergonomic coupling with the first part of the user's body and a second condition configured for ergonomic coupling with a second part of the user's body, different from said first part and substantially symmetrical to said first part, maintaining the user interface in a position of ergonomic use for the user and with access conditions by the user substantially corresponding to the first condition.

According to the preferred embodiment, the first stop element and the second stop element extend substantially perpendicular with respect to the base and are releasably connected to respective mating attachment seatings made on the lower surface of said base.

Due to this configuration, the device is more compact since the stop elements are included in the lateral bulk of the base and do not extend laterally with respect to said base.

Advantageously, in a preferential embodiment, the wearable device according to the present invention can be worn without distinction on both wrists, right or left, of the user, maintaining the same wearability and the same type of access and management of the user interface.

The wearable device is configurable mechanically in a quick and easy way, to change position between the two parts of the user's body, even when it is in use.

The device according to the present invention is applicable when the user interface or user interfaces mounted on the rigid structure have functional symmetry with respect to the axis of the user's arm, and also when they have functional symmetry or asymmetry with respect to the perpendicular to the axis of the user's arm, since their position with respect to the arm is preserved when passing from one to the other of said two configurations.

Here and in the rest of the description, by functional symmetry of an element with respect to an axis, we mean that a functional element of the device, or the parts that make it up, is positioned symmetrically, or is symmetrical, with respect to said axis.

When some user interfaces, for example a speaker, are mounted on the stop elements, it is necessary according to the present invention that said user interfaces have a functional symmetry with respect to the perpendicular to the axis of the arm.

In the case of functional apertures of the user interface, such as slots for memory cards, PCMCIA, sockets, connectors and suchlike, made on the rigid structure, the present invention provides that said functional apertures have a functional symmetry with respect to the axis of the arm, or have a functional symmetry or asymmetry with respect to the perpendicular to the axis of the arm. For example, it is advantageous to position a USB type connector on a vertical side of the rigid structure, shifted, during use, towards the user's hand.

If the functional apertures are made on said stop elements, the application of the present invention provides that they have a functional symmetry with respect to the perpendicular to the axis of the arm.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a view of separate parts of a wearable device according to the present invention; and
- fig. 2 is a schematic view of the sequence of assembly and dis-assembly of a wearable device according to the present invention, passing from a condition where it is worn on the right wrist to a condition where it is worn on the left wrist.

### DETAILED DESCRIPTION OF A PREFERENTIAL FORM OF EMBODIMENT

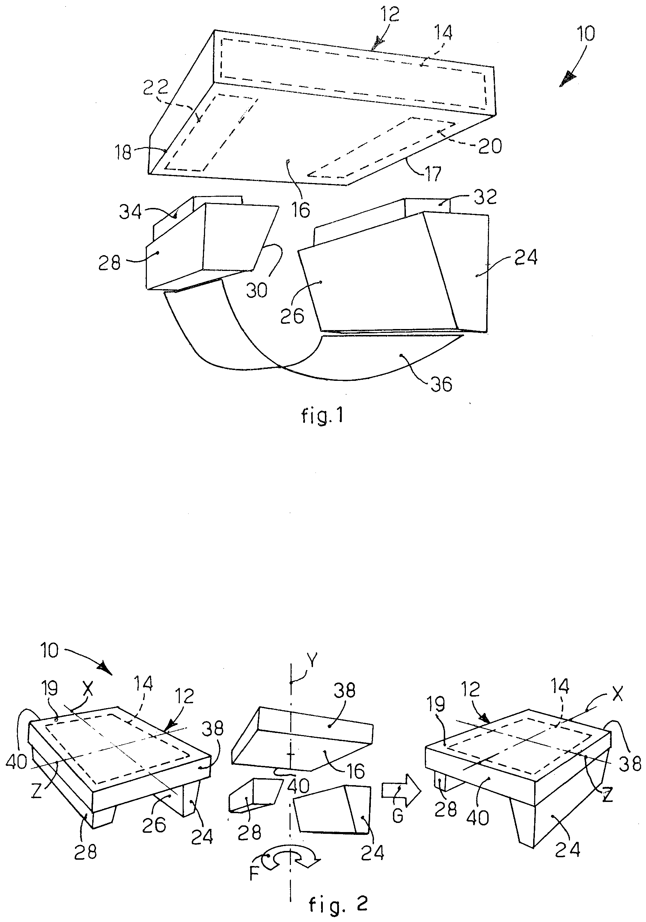

With reference to fig. 1, a device 10 according to the present invention can be worn on the left or right wrist of a user's forearm and comprises a rigid structure 12 substantially of a box-like type with a lower base surface 16 and an upper surface 19, parallel to each other. The structure 12 is able to contain at least partly inside it a user interface 14, such as for example a display and other devices or instruments of an electronic or mechanical type which function as a unit for the introduction and/or display of data and/or information.

The user interface 14 is represented for convenience only by a line of dashes and schematically in figs. 1 and 2.

According to the present invention the user interface 14 is of the type chosen from a group comprising:
- user interfaces 14 having a functional symmetry with respect to an axis X (fig. 2) defined by the user's arm;
- user interfaces 14 having a functional symmetry with respect to an axis Z perpendicular to the axis X (fig. 2);
- user interfaces 14 having functional asymmetry with respect to axis Z.

The lower base surface 16, in the case shown here as a non-restrictive example, of a substantially plane type, is able to be disposed resting on the plane of the wrist.

The base surface 16 is provided with two attachment seatings 20, 22, of identical type and symmetrical with respect to an ideal median axis of the device 10 parallel to the axis X of the user's forearm, by means of which it is possible to attach two relative mating stop elements 24 and 28. The attachment seatings 20 and 22 are provided with suitable attachment means, for example of the mechanical type, snap-in, hook, bayonet, attachment teeth, pressure, releasable joint or electromagnetic type, such as an electromagnet, or magnetic, such as a magnet. In particular, the attachment seatings 20 and 22 are disposed, a first 20 on the right side 17 of the surface 16 in fig. 1, and a second 22 on the left side 18 of the surface 16 in fig. 1.

The stop elements 24 and 28 can be of a different shape from each other, as can be seen in figs. 1 and 2, both to adapt ergonomically to the two different parts of the wrist, internal and external, on which they rest, and also, if required by the user, so as to house different electronic devices. In particular, the stop elements 24 and 28 have corresponding internal surfaces 26 and 30, which are shaped ergonomically to the relative surface of the wrist and/or forearm which they will contact, for the user's maximum comfort. The stop elements 24 and 28 are attached substantially perpendicular to the base 16 and, to complete the attachment to the wrist, a band 36 is provided, in a single body or consisting of two portions connected for example by means of Velcro which, by means of suitable through fissures made at the ends of the stop elements 24 and 28, not shown in the drawings, is connected selectively to the two stop elements 24 and 28, thus achieving substantially a bracelet structure.

In particular, the stop elements 24 and 28 are provided, in a position opposite the connection ends of the band 36, with relative connectors 32 and 34, of the releasable rapid attachment type, and/or mechanical and/or electric and/or electromagnetic, shaped so as to mate with the attachment seatings 20 and 22.

By means of the selective cooperation between the connectors 32 and 34 and the attachment seatings 20 and 22, a selectively releasable attachment is achieved between the structure 12 and the stop elements 24 and 28.

This attachment is preferably made on the base surface 16, in order to save space and reduce bulk, but according to necessity, it could also be made on the vertical side walls of the rigid structure 12.

The attachment seatings 20 and 22 are configured to allow the connection of the connectors 32 and 34 of each stop element 24 and 28 only univocally. In other words, the stop elements 24 and 28 have a first configuration of use which couples geometrically with the respective attachment seating 20 and 22 whereas, by rotating them by 180° with respect to an axis of rotation Y perpendicular to the surfaces 16 and 19, and, when the device 10 is worn on the wrist, perpendicular to the plane of the wrist, the geometric coupling respectively with the attachment seating 20 and 22 can no longer be achieved (figs. 1 and 2). To give a non-restrictive example of the present invention, in this first configuration of use the device 10 is able, by construction, to be worn on the user's right wrist and/or forearm, with optimum wearability and accessibility to the various functions of the user interface 14.

In this first configuration of use, the stop element 24 mounted along the side 17 has its surface 26 disposed externally with respect to the right wrist and/or forearm, that is, adjacent to the external side of the right wrist and/or forearm, while the stop element 28 mounted along the side 18 has its surface 30 disposed internally with respect to the right wrist and/or forearm, that is, adjacent to the internal side of the right wrist and/or forearm.

Apart from in said first configuration, the device according to the present invention can also be used by the user in a second configuration, on the left wrist, while maintaining optimum wearability and functionality. In particular, in the second configuration, the interface 14 is in a position of ergonomic use for the user and with accessibility and interaction for the user substantially corresponding to the first condition. This means that all the elements of the interface 14 are in the same position with respect to the user, whether the device 10 is worn on the right wrist or on the left wrist.

The second configuration is determined by the user by dis-assembling the stop elements 24 and 28 from the surface 16, possibly after having prepared the user interface 14 for reconfiguration, rotating them by 180° with respect to said axis of rotation Y (fig. 2), with respect to their first configuration of use, and again assembling them on the surface 16, as can be seen in fig. 2. In other words, the stop elements 24 and 28 are rotated and their position exchanged by assembling the element 24 along the side 18 and coupled with the attachment seating 22, and by assembling the element 28 along the side 17 and coupled with the attachment seating 20, as is clear from the sequence in fig. 2.

An innovative characteristic of the present invention is that, once disassembled from the surface 16 and rotated by 180° with respect to said axis Y, as indicated by the arrow F in fig. 2, the stop elements 24 and 28 are able to achieve a geometric coupling respectively with the attachment seatings 22 and 20, in order to determine said second configuration of use (fig. 2). It is equivalent if, instead of the stop elements 24 and 28, the user rotates the rigid structure 12 by 180°.

Fig. 2 shows the passage from the first to the second configuration, in the direction indicated by the arrow G, and the reciprocal position between the stop elements 24 and 28 and the rigid structure 12 can be seen, and in particular the inversion of position with respect to the sides 38 and 40 of the rigid structure 12 can be noted.

It can clearly be seen from fig. 2 how the second configuration is not obtained by means of a simple rotation of the whole device 10, but by dis-assembling, rotating by 180° and re-assembling in an inverted position the stop elements 24 and 28, or equivalently, by rotating the rigid structure 12 by 180°.

In this second configuration of use, the device 10 is able to be worn on the user's left wrist and/or forearm, with the same properties of wearability and optimum accessibility to the functions of the user interface 14 which it has when it is worn on the right wrist and/or forearm.

In this second configuration, the stop element 24 is coupled with the attachment seating 22 and the stop element 28 is coupled with the attachment seating 20. Therefore, in the second configuration, the stop element 28 is assembled along the side 17 and has its surface 30 disposed internally with respect to the left wrist and/or forearm, that is, adjacent to the internal side of the left wrist and/or forearm, whereas the stop element 24 is assembled along the side 18 and has its surface 26 disposed externally with respect to the left wrist and/or forearm, that is, adjacent to the external side of the left wrist and/or forearm.

According to an advantageous form of embodiment of the present invention, the stop elements 24 and 28 can contain inside them some electronic devices, not shown in the drawings, able to cooperate with the user interface 14, for example an electric feed unit, an alphanumerical keyboard, a secondary display or other. In this case, the connectors 32 and 34 and the relative attachment seatings 20 and 22 are also suitable for the electric connection between the various electronic devices mounted in the rigid structure 12 and those installed in the stop elements 24 and 28.

It is clear that modifications and/or additions of parts may be made to the wearable device as described heretofore, without departing from the field and scope of the present invention.

It is also clear that, although the present invention has been described with reference to some examples, a person of skill in the art shall certainly be able to achieve many other equivalent forms of wearable device, having the characteristics as set forth in the claims and hence all coming within the field of protection defined thereby.

## Claims

1. Wearable device comprising a rigid structure (12) with an at least partial function as a bracelet and provided with a base (16), said rigid structure (12) being able to be associated with a first part of a user's body and at least a user interface (14), in order to insert or receive information and/or to display data, associated with said rigid structure (12), wherein said rigid structure (12) comprises a first stop element (24) and a second stop element (28) able to be connected releasably to said base (16) so as to assume a first condition configured for ergonomic coupling with said first part of the user's body and a second condition configured for ergonomic coupling with a second part of the user's body, different from said first part and substantially symmetrical to said first part, maintaining said user interface (14) in a position of ergonomic use for the user and with access conditions for the user substantially corresponding to said first condition, **characterized in that** said first stop element (24) and said second stop element (28) extend substantially perpendicular with respect to said base (16) to be disposed, respectively, adjacently to an external and to an internal side of a wrist or forearm, are releasably connected to respective mating attachment seatings (20, 22) made on the lower surface of said base (16), and have a different shape each other, so as to define corresponding internal surfaces (26, 30) which are shaped ergonomically to the relative surface of the wrist and/or forearm which they will contact, said first (24) and second (28) stop elements being adapted to be used in two different ergonomical configurations, respectively a first for a right wrist and/or forearm and a second for a left wrist and/or forearm, wherein the second configuration is obtained by disassembling said stop elements (24, 28) from said base (16), rotating them by 180° with respect to the first configuration, and then assembling them on said base (16).

2. Wearable device as in claim 1, **characterized in that** each of said stop elements (24, 28) is able to house inside it at least an electronic device.

3. Wearable device as in claim 1, **characterized in that**, in order to complete the attachment to the wrist, a band (36) is provided, connected to the ends of said stop elements (24, 28).

4. Device as in any claim hereinbefore, **characterized in that** in said first condition, said first stop element (24) and said second stop element (28) are connected to said base (16) by means of releasable attachment means (20, 22, 32, 34), in correspondence, respectively, with a first side (17) and with a second side (18) of said base (16), wherein said releasable attachment means (20, 22, 32, 34) are configured to also allow the univocal positioning in said second condition in which said first stop element (24) is positioned along said second side (18) and said second stop element (28) is positioned along said first side (17).

5. Device as in claim 4, **characterized in that** in said first condition, said first stop element (24) is fixed substantially perpendicular along said first side (17) of said base (16) and has a first ergonomically-shaped surface (26) able to rest laterally on an internal surface of the first part of the user's body, and said second stop element (28) is fixed substantially perpendicular along a second side (18), opposite said first side (17), of said base (16) and has a second ergonomically-shaped surface (30) able to rest laterally on an external surface of the first part of the user's body.

6. Device as in claim 4 or 5, **characterized in that** said stop elements (24, 28) comprise respective attachment portion (32, 34) able to cooperate in a releasable way with the respective seatings (20, 22).

7. Device as in claim 6, **characterized in that** said attachment portions (32, 34) are of the rapid attachment type, mechanical and/or electric and/or electromagnetic.

8. Device as in claim 6, **characterized in that** said attachment seatings (20, 22) are provided with attachment means, of the mechanical type, snap-in, hook, bayonet, attachment teeth, pressure, releasable joint or electromagnetic type, such as an electromagnet, or magnetic, such as a magnet.

9. Device as in claim 1, **characterized in that** in said second condition, said first attachment seating (20) and said second attachment portion (34) are able to be connected univocally and releasably to each other, so that said first surface (26) is able to rest laterally on the internal surface of said second part of the user's body, and said second attachment seating (22) and said first attachment portion (32) are able to be connected univocally and releasably to each other, so that said second surface (30) is able to rest laterally on the external surface of said second part of the user's body.

10. Device as in any claim hereinbefore, **characterized in that** said user interface (14) comprises at least an electronic processing and data display device.

11. Device as in any claim hereinbefore, **characterized in that** said user interface (14) is of the type chosen from a group comprising:
- user interfaces (14) having a functional symmetry with respect to an axis (X) defined by the user's arm;
- user interfaces (14) having a functional symmetry with respect to an axis (Z) perpendicular to said axis (X) defined by the user's arm;
- user interfaces (14) having a functional asymmetry with respect to said axis (Z).

## Patentansprüche

1. Tragbare Vorrichtung, die eine starre Struktur (12) mit einer zumindest teilweisen Funktion als Armband und ausgestattet mit einer Basis (16) umfasst, wobei die starre Struktur (12) mit einem ersten Teil des Körpers eines Benutzers und mindestens einer Benutzerschnittstelle (14) assoziiert werden kann, um Informationen einzugeben oder zu empfangen und/oder um Daten anzuzeigen, die mit der starren Struktur (12) assoziiert sind, wobei die starre Struktur (12) ein erstes Anschlagelement (24) und ein zweites Anschlagelement (28) umfasst, die lösbar mit der Basis (16) verbunden werden können, um eine erste Stellung, die zum ergonomischen Verbinden mit dem ersten Teil des Körpers eines Benutzers konfiguriert ist, und eine zweite Stellung, die zum ergonomischen Verbinden mit einem zweiten Teil des Körpers eines Benutzers, der von dem ersten Teil verschieden und im Wesentlichen symmetrisch dazu ist, konfiguriert ist, einzunehmen, wodurch die Benutzerschnittstelle (14) in einer Position der ergonomischen Verwendung für den Benutzer und mit Zugangsstellungen für den Benutzer, die im Wesentlichen der ersten Stellung entsprechen, beibehalten wird, **dadurch gekennzeichnet, dass** das erste Anschlagelement (24) und das zweite Anschlagelement (28) sich in Bezug auf die Basis (16) im Wesentlichen senkrecht erstrecken, um angrenzend an eine äußere bzw. eine innere Seite eines Handgelenks oder eines Unterarms angeordnet zu werden, lösbar mit entsprechenden Kontaktbefestigungssitzen (20, 22) verbunden sind, die an der unteren Fläche der Basis (16) angebracht sind, und jeweils eine andere Form als das andere aufweisen, um entsprechende Innenflächen (26, 30) zu definieren, die ergonomisch angepasst an die relative Fläche des Handgelenks und/oder des Unterarms, mit dem sie in Kontakt kommen, geformt sind, wobei das erste (24) und das zweite (28) Anschlagelement dazu ausgelegt sind, in zwei unterschiedlichen ergonomischen Konfigurationen verwendet zu werden, und zwar eine erste für ein rechtes Handgelenk und/oder einen rechten Unterarm und eine zweite für ein linkes Handgelenk und/oder einen linken Unterarm, wobei die zweite Konfiguration erhalten wird, indem die Anschlagelemente (24, 28) von der Basis (16) abgenommen werden, um 180° bezüglich der ersten Konfiguration gedreht werden und dann an der Basis (16) angebracht werden.

2. Tragbare Vorrichtung nach Anspruch 1, **dadurch gekennzeichnet, dass** jedes der Anschlagelemente (24, 28) mindestens eine elektronische Vorrichtung in seinem Inneren beherbergen kann.

3. Tragbare Vorrichtung nach Anspruch 1, **dadurch gekennzeichnet, dass** zum Vervollständigen des Anbringens am Handgelenk ein Band (36) vorgesehen ist, das mit den Enden der Anschlagelemente (24, 28) verbunden ist.

4. Vorrichtung nach einem der vorhergehenden Ansprüche, **dadurch gekennzeichnet, dass** in der ersten Stellung das erste Anschlagelement (24) und das zweite Anschlagelement (28) mittels lösbarer Befestigungsmittel (20, 22, 32, 34) mit der Basis (16) verbunden sind, in Übereinstimmung mit einer ersten Seite (17) bzw. mit einer zweiten Seite (18) der Basis (16), wobei die lösbaren Befestigungsmittel (20, 22, 32, 34) dazu konfiguriert sind, auch das eindeutige Positionieren in der zweiten Stellung zu ermöglichen, in der das erste Anschlagelement (24) entlang der zweiten Seite (18) positioniert ist und das zweite Anschlagelement (28) entlang der ersten Seite (17) positioniert ist.

5. Vorrichtung nach Anspruch 4, **dadurch gekennzeichnet, dass** in der ersten Stellung das erste Anschlagelement (24) im Wesentlichen senkrecht entlang der ersten Seite (17) der Basis (16) befestigt ist und eine erste ergonomisch geformte Oberfläche (26) aufweist, die seitlich auf einer Innenfläche des ersten Teils des Körpers des Benutzers aufliegen kann, und das zweite Anschlagelement (28) im Wesentlichen senkrecht entlang einer zweiten Seite (18), gegenüber der ersten Seite (17), der Basis (16) befestigt ist und eine zweite ergonomisch geformte Oberfläche (30) aufweist, die seitlich auf einer Außenfläche des ersten Teils des Körpers des Benutzers aufliegen kann.

6. Vorrichtung nach Anspruch 4 oder 5, **dadurch gekennzeichnet, dass** die Anschlagelemente (24, 28) jeweilige Befestigungsabschnitte (32, 34) umfassen, die mit den entsprechenden Sitzen (20, 22) auf lösbare Weise zusammenwirken können.

7. Vorrichtung nach Anspruch 6, **dadurch gekennzeichnet, dass** die Befestigungsabschnitte (32, 34) vom Schnellbefestigungstyp, mechanisch und/oder elektrisch und/oder elektromagnetisch sind.

8. Vorrichtung nach Anspruch 6, **dadurch gekennzeichnet, dass** die Befestigungssitze (20, 22) mit Befestigungsmitteln vom mechanischen Typ, Schnapptyp, Hakentyp, Bajonetttyp, Befestigungszähnetyp, Drucktyp, lösbaren Gelenktyp oder elektromagnetischen Typ, wie ein Elektromagnet, oder magnetisch, wie ein Magnet, versehen sind.

9. Vorrichtung nach Anspruch 1, **dadurch gekennzeichnet, dass** in der zweiten Stellung der erste Befestigungssitz (20) und der zweite Befestigungsabschnitt (34) eindeutig und lösbar miteinander verbunden werden können, so dass die erste Oberfläche (26) seitlich auf der Innenfläche des zweiten Teils des Körpers des Benutzers aufliegen kann, und der zweite Befestigungssitz (22) und der erste Befestigungsabschnitt (32) eindeutig und lösbar miteinander verbunden werden können, so dass die zweite Oberfläche (30) seitlich auf der Außenfläche des zweiten Teils des Körpers des Benutzers aufliegen kann.

10. Vorrichtung nach einem der vorhergehenden Ansprüche, **dadurch gekennzeichnet, dass** die Benutzerschnittstelle (14) mindestens eine Vorrichtung zur elektronischen Verarbeitung und Datenanzeige umfasst.

11. Vorrichtung nach einem der vorhergehenden Ansprüche, **dadurch gekennzeichnet, dass** die Benutzerschnittstelle (14) vom Typ ist, der aus einer Gruppe ausgewählt ist, die Folgendes umfasst:
- Benutzerschnittstellen (14) mit funktionaler Symmetrie in Bezug auf eine Achse (x), die vom Arm des Benutzers definiert wird;
- Benutzerschnittstellen (14) mit funktionaler Symmetrie in Bezug auf eine Achse (z), senkrecht zur Achse (x), die vom Arm des Benutzers definiert wird;
- Benutzerschnittstellen (14) mit funktionaler Asymmetrie in Bezug auf die Achse (z).

## Revendications

1. Dispositif portable comprenant une structure rigide (12) ayant une fonction au moins partielle de bracelet et muni d'une base (16), ladite structure rigide (12) pouvant être associée à une première partie d'un corps d'un utilisateur et au moins une interface utilisateur (14), permettant d'insérer ou recevoir des informations et/ou d'afficher des données, associée à ladite structure rigide (12), dans lequel ladite structure rigide (12) comprend un premier élément d'arrêt (24) et un second élément d'arrêt (28) pouvant être reliés de façon libérable à ladite base (16) de manière à assumer une première condition conçue pour l'accouplement ergonomique avec ladite première partie du corps de l'utilisateur et une seconde condition conçue pour l'accouplement ergonomique avec une deuxième partie du corps de l'utilisateur, différente de ladite première partie et sensiblement symétrique à ladite première partie, pouvant maintenir ladite interface utilisateur (14) dans une position d'emploi ergonomique pour l'utilisateur et avec des conditions d'accès pour l'utilisateur sensiblement correspondant à ladite première condition, **caractérisé en ce que** ledit premier élément d'arrêt (24) et ledit deuxième élément d'arrêt (28) s'étendent avec une orientation sensiblement perpendiculaire par rapport à ladite base (16), de manière à être placés, respectivement, en position adjacente à un côté extérieur et à un côté intérieur d'un poignet ou d'un avant-bras, sont reliés de façon libérable à des logements de fixation complémentaires (20, 22) réalisés sur la surface inférieure de ladite base (16) et présentent une forme différente l'un de l'autre, de manière à définir des surfaces intérieures correspondantes (26, 30), conformées de manière ergonomique à la surface correspondante du poignet et/ou de l'avant-bras avec lesquels ils sont en contact, lesdits premiers (24) et deuxième (28) élément d'arrêt étant aptes à être utilisés dans deux configurations ergonomiques différentes, respectivement une première confédération pour un poignet et/ou un avant-bras droit, et une seconde configurations pour un poignet et/ou un avant-bras gauche, dans lequel la seconde configuration est obtenue par le démontage desdits éléments d'arrêt (24, 28) de ladite base (16), par une rotation à 180° de ceux-ci par rapport à la première configuration, et le montage de ceux-ci sur ladite base (16).

2. Dispositif portable selon la revendication 1, **caractérisé en ce que** chacun desdits éléments d'arrêt (24, 28) est capable de loger à son intérieur au moins un dispositif électronique.

3. Dispositif portable selon la revendication 1, **caractérisé en ce que**, pour compléter la fixation au poignet, une bande (36) est reliée aux extrémités desdits éléments d'arrêt (24, 28).

4. Dispositif selon n'importe laquelle des revendications précédentes, **caractérisé en ce que**, dans ladite première condition, ledit premier élément d'arrêt (24) et ledit second élément d'arrêt (28) sont reliés à ladite base (16) par des moyens de fixation libérables (20, 22, 32, 34), respectivement au niveau d'un premier côté (17) et d'un second côté (18) ladite base (16), dans lequel les moyens de fixation libérable (20, 22, 32, 34) sont conçus pour en permettre également le positionnement univoque dans ladite seconde condition dans laquelle ledit premier élément d'arrêt (24) est positionné le long dudit second côté (18) et ledit second élément d'arrêt (28) est positionné le long dudit premier côté (17).

5. Dispositif selon la revendication 4, **caractérisé en ce que**, dans ladite première condition, ledit premier élément d'arrêt (24) est fixé avec une orientation sensiblement perpendiculaire le long dudit premier côté (17) de ladite base (16) et possède une première surface (26) de forme ergonomique pouvant s'appuyer latéralement sur une surface intérieure de la première partie du corps de l'utilisateur, et ledit second élément d'arrêt (28) est fixé avec une orientation sensiblement perpendiculaire le long d'un second côté (18), opposé audit premier côté (17) de ladite base (16), et possède une seconde surface de forme ergonomique (30) pouvant s'appuyer latéralement sur une surface extérieure de la première partie du corps de l'utilisateur.

6. Dispositif selon la revendication 4 ou 5, **caractérisé en ce que** lesdits éléments d'arrêt (24, 28) comprennent des parties de fixations respectives (32, 34), pouvant coopérer de façon libérable avec les logements respectifs (20,22).

7. Dispositif selon la revendication 6, **caractérisé en ce que** lesdites parties de fixation (32, 34) sont du type à fixation rapide, de type mécanique et/ou électrique et/ou électromagnétique.

8. Dispositif selon la revendication 6, **caractérisé en ce que** les 10 logements de fixation (20, 22) sont pourvus de moyens de fixation de type mécanique, à encliqueter, à accrocher, à baïonnette, des dents de fixation, à pression, de type électromagnétique, comme un électroaimant, ou de type magnétique, comme un aimant.

9. Dispositif selon la revendication 1, **caractérisé en ce que**, la seconde condition, ledit logement de fixation (20) et ladite seconde partie de fixation (34) peuvent être reliés de façon univoque et libérable l'un à l'autre, de manière que ladite première surface (26) soit capable de s'appuyer latéralement sur la surface intérieure de ladite seconde partie du corps de l'utilisateur, et ledit second logement de fixation (22) et ladite première partie de fixation (32) peuvent être reliés de façon univoque et libérable l'un à l'autre, de manière que la dite seconde surface (30) soit capable de s'appuyer latéralement sur la surface extérieure de ladite seconde partie du corps de l'utilisateur.

10. Dispositif selon importe laquelle des revendications précédentes, **caractérisée en ce que** ladite interface utilisateur (14) comprend au moins un dispositif électronique de traitement et d'affichage de données.

11. Dispositif selon n'importe laquelle des revendications précédentes, **caractérisé en ce que** ladite interface utilisateur (14) est d'un type choisi dans un groupe comprenant :
- des interfaces utilisateur (14) ayant une symétrie fonctionnelle par rapport à un axe (X) défini par le bras de l'utilisateur ;
- des interfaces utilisateur (14) ayant une symétrie fonctionnelle par rapport à un axe (Z) perpendiculaire audit axe (X) défini par le bras de l'utilisateur ;
- des interfaces utilisateurs (14) ayant une symétrie fonctionnelle par rapport audit axe (Z).
